# Europäisches Patentamt

# European Patent Office

# Office européen des brevets

(11) Veröffentlichungsnummer: **0 180 116**
**B1**

# EUROPÄISCHE PATENTSCHRIFT

(45) Veröffentlichungstag der Patentschrift:
12.10.88

(51) Int. Cl.⁴: **C 09 B 69/06,** C 09 B 67/08, C 09 B 67/22

(21) Anmeldenummer: 85113285.2

(22) Anmeldetag: 19.10.85

(54) Farbverstärkte Permanent-Pigmente aus gefällten kationischen Farbstoffen.

(30) Priorität: 31.10.84 US 666947

(43) Veröffentlichungstag der Anmeldung:
07.05.86 Patentblatt 86/19

(45) Bekanntmachung des Hinweises auf die Patenterteilung:
12.10.88 Patentblatt 88/41

(84) Benannte Vertragsstaaten:
CH DE FR GB LI

(56) Entgegenhaltungen:
DE-B-2 707 972
DE-C-523 464
GB-A-379 397
GB-A-1 156 836
US-A-3 573 946

(73) Patentinhaber: MOBAY CORPORATION, Mobay Road, Pittsburgh Pennsylvania 15205- 9741 (US)

(72) Erfinder: Oliver, Vincent S., 14 Oak Crest Road, West Orange New Jersey 07052 (US)
Erfinder: Tames, Walter, 11 Roosevelt Drive, Hillside New Jersey 07205 (US)
Erfinder: Prochaska, Helmuth H., 90 Pines Lake Drive East, Wayne New Jersey 07470 (US)
Erfinder: Wieser, Karl- Heinz, Dr., Walter- Flex- Strasse 25, D-5090 Leverkusen (DE)

(74) Vertreter: Gerhards, Peter, Dr., Bayer AG Konzernverwaltung RP Patentabteilung, D-5090 Leverkusen 1 Bayerwerk (DE)

**0 180 116**

**Beschreibung**

Die vorliegende Erfindung betrifft Permanent-Pigmente, die durch Unlöslichmachen ausgewählter basischer oder kationischer Farbstoffe mit komplexen Heteropolysäuren in Gegenwart ausgewählter Farbverstärkungsmittel erhalten werden, die diesen Pigmenten ausreichende Farbwerte verleihen, um bei der Formulierung von lithographischen Druckfarben hoher Güte von Interesse zu sein.

Es ist wohlbekannt, daß brauchbare Pigmente durch Unlöslichmachen wasserlöslicher Farbstoffe erhalten werden können. Dies geschieht meist dadurch, daß ein molekular sperriges Gegenion mit einem sauren oder basischen Farbstoff umgesetzt wird. Beispielsweise wird Lithol Rubin B, der Azofarbstoff von 6-Amino-m-toluol-sulfonsäure und 2-Hydroxy-3-naphthoesäure, mit Calcium gefällt, wodurch das Color Index Pigment Red 57 erhalten wird. In ähnlicher Weise wird Color Index Basic Violet 10 mit Phosphomolybdän- oder Phosphorwolframsäure unter Bildung von Color Index Pigment Violet 1 gefällt. Diese Farbstoffe können permanent oder nichtpermanent unlöslich gemacht werden, je nach der Art des Fällungsmittels. Im Fall der basischen oder kationischen Farbstoffe liefern die komplexen Heteropolysäuren Permanent-Pigmente, während solche Mittel wie Gerbsäure (Tannin) und Brechweinstein (Kaliumantimonotartrat) nicht-permanente oder unechte Pigmente ergeben. Beide dieser Typen werden in Druckfarben verwendet. Diese organischen Pigmente und ihre Verwendungsmöglichkeiten in Druckfarben werden in "The Chemistry of Synthetic Dyes and Pigments", herausgegeben von H.A. Lubs, A.C.S. und Robert E. Krieger Publishing Company, 1972, Seite 625 bis 661, diskutiert. Die Permanent-Pigmente aus basischen Farbstoffen und ihre Verwendung werden auch in "Pigments Handbook", Band 1, Seite 605 bis 616, diskutiert.

Es ist auch bekannt, die Oberfläche von Pigmenten im allgemeinen zu behandeln, um ihre Dispergierbarkeit zu verbessern, und dies wird ausführlich in "Pigments Handbook", Band 3, Seite 159 bis 167, abgehandelt. Unter diesen Techniken gibt es die gemeinsame Fällung von Kolophonium mit Azofarbstoffen wie Lithol Rubin B, die ein Pigment mit hohen Farbstärken und guter Transparenz ergeben. Bei einer Variante dieser Technik werden Kolophonium-(Abietinsäure-)Derivate mit Ammonium-Gegenionen geringer Löslichkeit eingesetzt, die aus langkettigen aliphatischen Aminen erhalten wurden. Andere Techniken umfassen das Beschichten suspendierter Pigment-Teilchen mit Aminen. Die US-PSen 2 192 954 und 2 192 956 lehren die Behandlung anorganischer Pigmente mit einer Mannigfaltigkeit von Aminen, darunter quaternäre Ammonium-Salze und N-Alkyl-Pyridinium-Salze wie Hexadecyltrimethylammoniumbromid und Hexadecylpyridiniumbromid. Beispiel VI der ersteren Patentschrift lehrt auch die Behandlung eines organischen Pigments, Lake Bordeaux B, das gebildet wird durch Metallsalz-Fällung eines anionischen Farbstoffs, mit Hexadecylpyridiniumbromid zur Herstellung einer Druckfarbe.

Der Stand der Technik lehrt auch die gemeinsame Fällung eines kationischen grenzflächenaktiven Mittels und eines Azo-Pigments. Diese Pigmente fallen eher bei der Azo-Kupplung aus als bei der Komplexierung kationischer oder anionischer Gruppen an dem chromophortragenden Molekül. Da diese farbgebenden Verbindungen wasserunlöslich sind, fallen sie bei der Bildung aus. Die US-PSen 3 120 508 und 3 573 946 offenbaren den Zusatz verschiedener Ammonium-Salze, darunter Oleylaminacetat-Talgfett-Aminacetat und Kokosnußfett-Acetat, zu dem Azo-Kupplungsbad. Diese Behandlung hat eine Steigerung der Farbstärke zur Folge. Die US-PS 3 573 946 offenbart die Behandlung von Lackfarben sowie von Azo-Pigmenten. Jedoch andere Pigmente als die unmittelbar bei der Azo-Kupplung gebildeten werden gut nach der Bildung des Pigments behandelt. Diese nachbehandelten Pigmente, etwa Kupferphthalocyanine, ergeben Druckfarben mit guter Farbstärke ebenso wie die Farben auf der Basis von Azo-Pigmenten.

Es gibt auch einen Vorschlag in der GB-PS 1 156 836, wäßrige Farbsuspensionen gleichzeitig mit Metall-Verbindungen oder Harzen und Kolophonium-amin (Dehydroabietylamin) zu behandeln. Die genaue Bedeutung dieses Vorschlags ist nicht klar, jedoch soll hierdurch offenbar nicht das Konzept der gemeinsamen Fällung eines Lackpigments und eines Amins vermittelt werden. In dem einzigen Beispiel einer Lackfarbe, Beispiel 3 auf Seite 4, wird der Farbstoff zunächst mit Barium-Ionen unlöslich gemacht und dann mit Kolophonium-amin behandelt. Eine ähnliche Nachbehandlung von Lackfarben ist in den Beispielen 3 und 4 auf den Seiten 4 und 5 der GB-PS 1 080 115 offenbart und allgemein auf Seite 3, Zeile 19 bis 24, beschrieben. Jedoch ist in dieser GB-PS das Behandlungsmittel ein langkettiges aliphatisches Amin.

Es besteht nach wie vor Interesse an der Entwicklung neuer Pigmente durch Unlöslichmachen von Farbstoffen mit guter Farbstärke. Die Entwicklung derartiger Pigmente wird jedoch dadurch behindert, daß man bei der Fällung eine saubere helle Färbung nicht erhalten kann. Obwohl beispielsweise das durch Fällen von Color Index Basic Red 12 mit Silicomolybdänsäure gewonnene Pigment in den Vereinigten Staaten in sehr geringer Menge technisch als eine Tönungskomponente verwendet wurde, war seine Farbe für einen Einsatz als wesentliche Pigment-Komponente zu schlecht. Obwohl das "Pigment and Dyestuff Manual" der Bayer AG, eines Herstellers von Color Index Basic Red 12, auf Seite 195 vorschlägt, daß ein Niederschlag dieses Farbstoffs (als Astra Phloxine G bezeichnet) in flexographischen Druckfarben eingesetzt werden könne, wird er nicht für diesen Zweck verwendet.

Dieser Farbstoff wäre dann von besonderem Interesse für die Druckindustrie, wenn er in ein reines helles Pigment mit guter Transparenz umgewandelt werden könnte. Er besitzt eine Nuance, die ein derartiges Pigment zu einer ernsthaften Alternative zu Color Index Pigment Red 81 in Gemischen mit Color Index Pigment Red 57 machen würde, die einen roten Illustrations-Druckfarbstoff für das Verfahren des Vierfarbendrucks auf Papier liefert. Je höher die gewünschte Qualität des Illustrations-Rots ist, desto mehr Pigment Red 81 wird in dem Gemisch verwendet. Jedoch ist die Nuance des Pigment Red 81 nicht ideal, und es ist zwischen drei- und

2

viermal so teuer wie das Red 57.

Nunmehr wurde gefunden, wie man aus Color Index Basic Red 12 ein Pigment gewinnen kann, das gleichermaßen rein und blauer als Color Index Pigment Red 81 ist. Es wurde weiter gefunden, wie man den Farbwert anderer, ausgewählter, mit komplexen Heteropolysäuren gefällter kationischer Farbstoffe wesentlich verbessern kann.

Die vorliegende Erfindung betrifft ein Verfahren zur Gewinnung von Permanent-Pigmenten hoher Qualität aus ausgewählten kationischen Farbstoffen durch Fällen dieser Farbstoffe aus wäßrigen Lösungen mit komplexen Heteropolysäuren in Gegenwart ausgewählter Amin-Farbverstärkungsmittel, die mit Hilfe dieses Verfahrens hergestellten Pigmente sowie die Verwendung dieser Pigmente in Druckfarben. Die kationischen Farbstoffe sind aus der aus Color Index Basic Red 12, Color Index Basic Red 14, Color Index Basic Red 28 und Color Index Basic Violet 10 bestehenden Gruppe ausgewählt. Das Farbverstärkungsmittel ist ein quaternäres Ammonium-Salz, ein Ammonium-Salz eines von Kolophonium abgeleiteten Amins oder der Komplex jedes dieser beiden mit einer komplexen Heteropolysäure.

Der kationische Farbstoff kann irgendeiner der Farbstoffe Color Index Basic Red 12, Color Index Basic Red 14, Color Index Basic Red 28 oder Color Index Basic Violet 10 sein. Das mit dem Farbstoff verbundene Anion kann irgendeines derjenigen sein, die in der Farbstoff-Chemie bekannt sind und unter stark sauren Bedingungen durch eine komplexe Heteropolysäure verdrängt werden können. Die gebräuchlichsten, mit diesen Farbstoffen verwendeten Anionen sind Sulfat-, Di-ydrogenphosphat- und Chlorid-Ionen, von denen das Chlorid-Ion ganz besonders bevorzugt wird. Die Farbstoffe Color Index Basic Red 12, Color Index Basic Red 14 und Color Index Basic Red 28 werden bevorzugt, wobei Color Index Basic Red 12 besonders bevorzugt wird.

Die Farbstoffe können zu Beginn sowohl in fester als auch in flüssiger Form vorliegen. Diese Farbstoffe sind typischerweise erhältlich in pulverisierter Form, für gewöhnlich physikalisch vermischt mit Einstellmitteln (Standardisierungsmitteln) und Packmitteln. Sie können auch in Form des Preßkuchens eingesetzt werden, der bei ihrer chemischen Synthese erhalten wird. Eine besonders zweckmäßige Form ist die Lösung. In dieser Hinsicht ist Basic Red 12 gelöst in Essigsäure erhältlich, was eine besonders bevorzugte Form darstellt.

Die komplexe Heteropolysäure kann eine beliebige derjenigen sein, die in der Fachwelt als geeignet für das Unlöslichmachen kationischer Farbstoffe zur Bildung von Permanent-Pigmenten, die sich von basischen Farbstoffen ableiten, anerkannt sind. Diese sind typischer Weise aus den Oxiden von Molybdän, Wolfram oder beiden und Phosphor, Silicium oder beiden gebildete komplexe Säuren. In einigen der geeigneten komplexen Säuren wird ein Teil des Phosphors oder Siliciums durch Vanadium ersetzt. Typischerweise geschieht dies, um die Hochtemperatur-Toleranz des Pigments für Anwendungen wie das Färben von Nitrocellulose zu verstärken. Die bevorzugten komplexen Heteropolysäuren sind Phosphowolframsäure, Phosphomolybdansäure, Silicomolybdänsäure, Silicowolframsäure, Phosphosilicowolframsäure, Phosphosilicomolybdänsäure, Phosphomolybdänwolframsäure, Silicomolybdänwolframsäure und Phosphosilicomolybdänwolframsäure. Zu anderen geeigneten Säuren zählen Phosphovanadomolybdänsäure, Phosphovanadowolframsäure, Silicovanadomolybdänsäure, Silicovanadowolframsäure, Phosphovanadomolybdowolframsäure, und Silicovanadomolybdowolframsäure.

Das spezielle, am besten geeignete, die komplexe Heteropolysäure umfassende Fällungsmittel hängt ab von dem speziellen zu fällenden kationischen oder basischen Farbstoff und dem endgültigen Verwendungszweck des Produkts. Während beispielsweis die Silicium enthaltenden komplexen Heteropolysäuren im allgemeinen eine bessere Brillanz entfalten, neigt andererseits Silicium dazu, die Nuance solcher Pigmente wie Rhodamin B (Color Index Basic Violet 10) nachteilig zu beeinflussen. Weiterhin neigen Pigmente auf Wolfram-Basis leichter zum Verblassen, während Molybdän-Pigmente zum Nachdunkeln beim Altern tendieren, so daß man in Situationen, in denen eine Beständigkeit gegenüber Farbänderungen beim Altern wichtig ist, versuchen kann, eine Kompensation dieser Effekte zu erzielen. Die zur Herstellung von Pigmenten, die für Druckfarben, insbesondere für schnellen Offset-Druck, geeignet sind, besonders bevorzugte komplexe Heteropolysäure ist Silicomolybdänsäure.

Das Farbvestärkungsmittel kann ein beliebiges quaternäres Ammonium-Salz oder das Ammoniumsalz sein, das aus einem von Abietinsäure oder solchen natürlichen oder synthetischen Derivaten derselben abgeleiteten Amin erhalten wird, die keine Gruppen tragen, die die Eigenschaften des fertigen Pigments nachteilig beeinflussen. Die Substituenten an dem Stickstoff-Atom des quaternären Salzes können aliphatisch oder aromatisch sein, oder das Stickstoff-Atom kann Teil eines N-substituierten heterocyclischen Ringsystems sein. Bevorzugte Substituenten am Stickstoff sind Alkyl-Gruppen, insbesondere langkettige Alkyl-Gruppen, und Phenyl-Ringe.

Bevorzugte heterocyclische Verbindungen sind die aromatischen N-substituierten Heterocyclen, insbesondere die N-substituierten Pyridine und ganz besonders die N- alkyl-substituierten Pyridine. Die am meisten bevorzugten dieser Verbindungen sind die normalen, mit langkettigem Alkyl substituierten Pyridine wie Cetylpyridiniumchlorid. Zu anderen interessierenden aromatischen Heterocyclen zählen Pryidazin, Pyrimidin und Chinolin.

Eine Anzahl geeigneter Amine sind bekannt, die aus Kolophonium erhalten werden können, das selbst primär Abietinsäure ist. Diese Amine können erhalten werden durch Umwandlung der Carboxyl-Gruppe des Harzes oder der Harz-Säure in eine Cyano-Gruppe durch Reaktion mit Ammoniak und nachfolgende Hydrierung zum Amin. Amine dieses Typs sind in der GB-PS 1 156 836 als "Harz-Amine" beschrieben. Diese Amine können sich von Abietinsäure selbst oder von ihren bekannten Derivaten, etwa den hydrierten Harz-Derivaten, ableiten. Hierzu gehören Dihydroabietinsäure, Tetrahydroabietinsäure und dimere Dihydroabietinsäure. Zu geeigneten, von diesen Ausgangsstoffen ableitbaren Aminen zählen Abietylamin, N-Abietyltrimethylendiamin und Dehydroabietylamin. Die meistbevorzugten dieser Amine sind diejenigen, die durch direkte Umwandlung von typischem Kolophonium in ein Amin vermittels Reaktion mit Ammoniak und nachfolgende Hydrierung erhalten werden, insbesondere Dehydroabietylamin.

Das Pigment mit gesteigerter Brillanz wird durch Ausfällen des kationischen Farbstoffs aus einer wäßrigen Lösung mit einer komplexen Heteropolysäure in Gegenwart des Farbverstärkungsmittels gebildet. Das Farbverstärkungsmittel muß in dem wäßrigen Bad zum Zeitpunkt des Stattfindens der Fällung vorhanden sein, oder die Verbesserung des Farbwertes im Vergleich zu demjenigen eines ohne Farbverstärkungsmittel hergestellten Pigments ist nicht zu beobachten. Keine nennenswerte Verbesserung des Farbwertes wird beobachtet, wenn man das bereits gefällte Pigment mit dem Farbverstärkungsmittel kombiniert. Andererseits kann das Farbverstärkungsmittel mit der komplexen Heteropolysäure gefällt und dann in dem wäßrigen Bad suspendiert werden, aus dem das Pigment gefällt wird, obwohl dies eine weniger bevorzugte Arbeitsweise darstellt.

Ein Pigment mit einem erhöhten Farbwert kann auch dadurch erhalten werden, daß einer der oben aufgeführten primären kationischen Farbstoffe mit einer kleineren Menge eines anderen, sekundären kationischen Farbstoffs gemeinsam ausgefällt wird. Wenngleich der Farbwert des Pigments, das durch Fällen dieses sekundären Farbstoffs allein in Gegenwart des Farbverstärkungsmittels erhalten wird, überhaupt nicht verstärkt wird, beeinträchtigt dieses Pigment den Farbwert des bei der gemeinsamen Fällung erhaltenen Pigments nicht nennenswert. Stattdessen beeinflußt es einfach die Farbtönung des primären kationischen Farbstoffs. Der gleiche Effekt tritt nicht auf, sofern der primäre kationische Farbstoff und der sekundäre kationische Farbstoff einzeln jeweils in Anwesenheit des Farbverstärkungsmittels gefällt und die beiden Pigmente danach vermischt werden.

Zur Senkung jeglicher Farbwert-Einbußen auf ein Minimum wird ein Einsatz von 10 % oder weniger des sekundären Farbstoffs bevorzugt, und besonders bevorzugt werden 5 % oder weniger, bezogen auf das Gewicht beider Farbstoffe, eingesetzt. Besonders vorteilhafte Ergebnisse wurden mit Mengen zwischen 2 und 5 Gew.-%, bezogen auf das Gewicht beider Farbstoffe, erzielt.

Die Fällung wird im allgemeinen dadurch bewirkt, daß man den primären kationischen Farbstoff in wäßrigem Medium löst, den pH dieser Lösung auf einen Wert im Sauren einstellt und diese Lösung mit der komplexen Heteropolysäure vereinigt. Das Farbverstärkungsmittel kann dem fertigen Bad gleichzeitig mit der Farbstoff-Lösung und der Fällungssäure zugesetzt werden, oder es kann zuvor mit der einen oder der anderen der beiden Hauptkomponenten vermischt werden. Vorzugsweise wird es mit der Lösung des primären kationischen Farbstoffs vermischt. Es ist besonders zweckmäßig, die Temperatur, den pH und die Konzentration dieser Lösung einzustellen, so daß das Farbverstärkungsmittel sich ebenfalls in Lösung befindet. Außerdem wird bevorzugt, die Säure zur Fällung zu der Lösung des kationischen Farbstoffs hinzuzufügen.

Die relativen Mengen des kationischen Farbstoffs und der als Fällungsmittel verwendeten komplexen Heteropolysäure werden durch praktische Erwägungen diktiert, ebenso auch die Konzentration der Reaktionspartner in dem wäßrigen Reaktionsmedium. Es wird bevorzugt, eine zur Fällung der Gesamtmenge des anwesenden kationischen Farbstoffs ausreichende Menge Säure einzusetzen, da Farbstoff, der etwa nicht unlöslich gemacht wurde, bei der Isolierung und dem Waschen des Pigments verloren gehen kann oder in dem Pigment eingeschlossen werden kann und dort ein nachträgliches Ausbluten verursacht. Dies erfordert die Bereitstellung der komplexen Heteropolysäure in aureichender Menge nicht nur zur Fällung des primären kationischen Farbstoffs, sondern auch des zu Tönungszwecken etwa anwesenden sekundären kationischen Farbstoffs und des Farbverstärkungsmittels. Andererseits wird vorzugsweise nur ein geringer Überschuß des Säure-Fällungsmittels verwendet, da jeglicher Überschuß desselben im allgemeinen nicht zur Wiederverwendung rückgewinnbar ist. Die Konzentration dieser Bestandteile sollte niedrig genug für eine verhältnismäßig leichte Steuerung von Temperatur und pH sein und auch hinreichend niedrig, daß die Viskosität des wäßrigen Mediums das Rühren oder die Filtration nicht beeinträchtigt. Vorzugsweise bereitet man eine Lösung von 2 Gew.-% oder weniger des Farbverstärkungsmittels und des kationischen Farbstoffs und eine Lösung von 10 Gew.-% oder weniger der komplexen Heteropolysäure.

Das Farbverstärkungsmittel ist in einer Menge zu verwenden, die zur Verstärkung des Farbwertes des erhaltenen Pigments ausreicht. Vorzugsweise verwendet man zwischen etwa 2,5 und 15 Teilen, und besonders bevorzugt zwischen etwa 5 und 11 Teilen auf 10 Teile des primären kationischen Farbstoffs. Der Einsatz einer größeren Menge an Farbverstärkungsmittel, als zur Erzielung der gewünschten Verstärkung des Farbwertes erforderlich ist, zieht einen unnötigen Verbrauch an komplexer Heteropolysäure nach sich. In dem wäßrigen Säure-Bad, in dem der kationische Farbstoff gefällt wird, ist das Farbverstärkungsmittel ein kationisches Ion, das etwa in der gleichen Weise der Fällung mit dieser Säure unterliegt wie der kationische Farbstoff.

Die Fällung kann bei jeder geeigneten Temperatur durchgeführt werden, bei der sich kationischer Farbstoff in der wäßrigen Lösung befindet. Vorzugsweise bedient man sich einer solchen Temperatur, bei der auch die komplexe Heteropolysäure sich nahezu vollständig in Lösung befindet. Es kann möglich sein, daß sich die zur Ausfällung verwendete Säure wegen ihrer komplizierten Natur nicht vollständig in Lösung bringen läßt. Es ist zweckmäßig, die Temperatur auf weniger als etwa 100°C zu begrenzen, wodurch die Notwendigkeit des Einsatzes von Geräten zum Arbeiten unter Druck entfällt. Temperaturen oberhalb von 30°C werden bevorzugt, und Temperaturen oberhalb von 40°C werden besonders bevorzugt. Weiterhin wird bevorzugt, die Temperaturen auf einen Wert von weniger als 70°C, und insbesondere von weniger 60°C, zu beschränken. Wenn ein tieferer Masseton angestrebt wird, sind Temperaturen von etwa 40°C oder weniger vorteilhaft.

Der in den verschiedenen Stufen des Arbeitsganges angewandte pH hängt sowohl von der angewandten Temperatur als auch von dem speziellen kationischen Farbstoff, dem Säure-Fällungsmittel und dem Farbverstärkungsmittel, die verwendet werden, ab. Jedoch sollte wenigstens der Schritt der Ausfällung im sauren Medium durchgeführt werden. In einer bevorzugten Ausführungsform werden der kationische Farbstoff und das Farbverstärkungsmittel in einem sauren wäßrigen Medium mit einem pH von nicht mehr als etwa 5, vorzugsweise von nicht mehr als etwa 4, gelöst. Die komplexe Heteropolysäure wird unter Bildung eines einigermaßen sauren wäßrigen Mediums mit einem pH von weniger als etwa 4,5, vorzugsweise weniger als etwa 2,5, gelöst.

Eine besonders bevorzugte Technik besteht darin, die komplexe Heteropolysäure aus einem Alkalimetallsalz von Molybdän oder Wolfram und einem Alkalimetallsilica oder -phosphat in einem stark sauren wäßrigen Medium herzustellen und sie dann einer wäßrigen Lösung des Farbverstärkungsmittels und des kationischen Farbstoffs zuzusetzen. Es ist besonders wünschenswert, daß dieses stark saure Medium einen pH zwischen etwa 2,4 und 2,7 aufweist.

Die Hauptanwendung dieser Pigmente liegt in farbigen Druckfarben, einschließlich flüssiger Farben, Tinten und Tuschen. Von diesen Farben bieten diejenigen, die für den schnellen Offset-Druck formuliert sind, besonders interessante Anwendungsmöglichkeiten für die vorliegenden farbverstärkten Pigmente. Diese Pigmente können bei der Formulierung einer Illustrationsfarbe für das Vierfarbendruck-Verfahren eingesetzt werden. Die farbverstärkten Pigmente auf der Basis des Color Index Basic Red 12 können beispielweise mit dem Calcium-Salz des Lithol Rubin B (Color Index Pigment Red 57) zu einer roten Illustrations-Druckfarbe zum Bedrucken von Papier kombiniert werden. Sie sind damit wirksame Ersatzstoffe für Rhodamin 5G (Color Index Pigment Red 81) zur Tönung des Pigments Lithol Rubin B. In dieser Hinsicht können sie ihre eigenen Nuancen haben, die durch gemeinsame Fällung mit sekundären kationischen Farbstoffen auf besondere Tönungs-Anwendungen eingestellt sind, insbesondere mit gelben Farbstoffen. Ihre natürlichen Nuancen neigen dazu, für eine ideale Tönungs-Komponente etwas zu blau zu sein.

Die vorliegende Erfindung wird durch die folgenden Beispiele näher erläutert, ist jedoch nicht auf diese beschränkt. Sofern nichts anderes angegeben ist, beziehen sich in den Beispielen alle Angaben von Teilen und Prozentsätzen auf das Gewicht.

**Beispiel 1**

Eine Lösung eines primären kationischen Farbstoffs wurde hergestellt durch Einrühren von 17,0 g einer 45-proz. Lösung von Color Index Basic Red 12 in Essigsäure in 500 ml Wasser von 50°C. Zu dieser Lösung wurden 10,0 g einer 50-proz. Lösung des Acetats des Dehydroabietylamins in einem Isopropanol-Wasser-Gemisch hinzugefügt. Das Volumen dieser Mischung wurde mit Wasser auf 870 ml eingestellt. Der pH lag am Ende bei etwa 4,1.

Eine Lösung einer komplexen Heteropolysäure wurde hergestellt durch Zugabe von 27,5 g kristallinem Natriummolybdat (59,4 Gew.-% $MoO_3$) zu 300 ml Wasser von 30°C. Zu dieser Mischung wurden 3,3 g Natriumsilicatpenthydrat (28,3 Gew.-% $SiO_2$) und 0,3 g $Na_2Cr_2O_7$. $H_2O$ hinzugegeben. Der pH wurde mit 25,7g einer HCl von 20 Be auf zwischen 2,5 und 2,6 eingestellt, und die Mischung wurde 15 min gerührt. Das Volumen wurde mit Wasser auf 525 ml eingestellt, und die Mischung wurde auf 50°C erhitzt. Der pH wurde überprüft und auf den Bereich 2,5 bis 2,6 eingestellt.

Die Lösung der komplexen Heteropolysäure wurde während einer Zeitspanne von etwa 10 min zu der Lösung des primären kationischen Farbstoffs hinzugefügt. Die Mischung wurde gerührt, bis ein Tüpfel-Test anzeigte, daß der Farbstoff vollständig ausgefällt war, d. h. beim Auftropfen einer Probe der Mischung auf Filterpapier kein Auslaufen der Farbe stattfand. Die gesamte Aufschlämmung wurde dann filtriert, mit Wasser gewaschen und bei 60°C getrocknet. Die Ausbeute an trockenem Pigment betrug 28,9 g.

Eine Massetonfarbe wurde hergestellt durch Vereinigen von 600 mg dieses Pigments mit 1400 mg eines Isophthalkyd-Lacks und Vermischen mit einer Mahlwalze (Muller) unter einem Gewicht von 68 kg (150 lb.). Die Mahlwalze wurde 100mal gedreht, und danach wurde der Inhalt mit einem Spatel vermischt. Dieser Arbeitsschritt wurde noch zweimal wiederholt.

Eine Verdünnung wurde hergestellt durch Kombinieren von 100 mg dieser Massetonfarbe mit 5 g eines Bleichweißes und Vermischen der Komponenten mit einer Mahlwalze unter einem Gewicht von 23 kg (50 lb.) und mit 50 Umdrehungen, gefolgt vom Vermischen mit einem Spatel, bis Einheitlichkeit hergestellt worden war. Bei dem Bleichweiß handelte es sich um Standardweiß des National Printing Ink Research Institute (NPIRI), das durch Vermahlen von 70 Teilen Zinkoxid mit 30 Teilen Abietinsäuremethylester gewonnen wurde.

Ein kleiner Teil der Massetonfarbe wurde auf ein ziemlich glattes Bankpostpapier gebracht und mit einem Abziehmesser in solcher Weise heruntergezogen, daß die obere Hälfte ein ziemlich dicker Film und die untere Hälfte ein dichter dünner Film war. Ein Teil der unteren Hälfte überdeckte einen vorher auf das Bankpostpapier aufgedruckten schwarzen Streifen von 2,5 cm (1 inch) Breite. Unmittelbar neben dieser Massetonfarbe wurde auf demselben Papier eine Massetonfarbe aus einem Standard in der gleichen Weise heruntergezogen. Der Standard wurde in genau der gleichen Weise wie das zu bewertende Pigment hergestellt, jedoch mit der Abweichung, daß das Dehydroabietylammoniumacetat fortgelassen wurde und die Menge der komplexen Heteropolysäure um die zur Fällung der fortgelassenen Ammonium-Verbindung benötigte Menge vermindert

# 0 180 116

wurde. Das Pigment war viel reiner, heller und transparenter.

Die Verdünnung dieses Pigments und die Verdünnung eines Standards, die in der gleichen Weise hergestellt, jedoch auf den gleichen Farbstoff-Gehalt wie dieses Pigment verdünnt worden war, wurden in der gleichen Weise wie die Massetonfarbe nebeneinander auf Bankpostpapier abgezogen. Die vorliegende Pigmentverdünnung war aufgrund visueller Bewertung stärker, reiner und blauer als die Standardbleiche. Diese Bewertung wurde durch eine rechnerunterstützte spektrographische Analyse bestätigt. Am Minimum des Reflexionsvermögens (der Reflektanz) der vorliegenden Pigmentverdünnung bei 560 nm hatte diese gemäß den Kubelka-Munk-Koeffizienten für die Verdünnungen bei dieser Wellenlänge eine Farbstärke von mehr als 17 % mehr als die Standardaufhellung.

## Beispiel 2

Die Arbeitsweise des Beispiels 1 wurde wiederholt, jedoch mit der Abweichung, daß das Dehydroabietylammoniumacetat auf molarer Basis durch Cetylpyridiniumchlorid ersetzt wurde. Wiederum zeigte das Pigment der vorliegenden Erfindung im Vergleich zu dem Standard überlegene Reinheit, Helligkeit und Transparenz in der Massetonfarbe und höhere Farbstärke in der aufgehellten Verdünnung.

## Beispiel 3

Die Arbeitsweise des Beispiels 1 wurde wiederholt, jedoch mit der Abweichung, daß das Dehydroabietylammoniumacetat auf molarer Basis durch gemischte aliphatisch-aromatische quaternäre Ammoniumsalze ersetzt wurde. Bei den Salzen handelte es sich um gleiche Mengen n-Alkyldimethylbenzylammoniumchlorid und n-Alkyldimethyl(ethylbenzyl)ammoniumchlorid, worin das "Alkyl" eine Mischung aus normalen Alkyl-Ketten mit 12, 14, 16 und 18 Kohlenstoff-Atomen Länge war. Wiederum zeigte das Pigment der vorliegenden Erfindung im Vergleich zu dem Standard überlegene Reinheit, Helligkeit und Transparenz in der Massetonfarbe und höhere Farbstärke in der aufgehellten Verdünnung.

## Vergleichsbeispiel 1

Die Arbeitsweise des Beispiels 1 wurde wiederholt, jedoch mit der Abweichung, daß das Acetat des Dehydroabietylamins nicht zusammen mit dem Color Index Basic Red 12 gefällt wurde. Stattdessen wurde die Lösung der komplexen Heteropolysäure in zwei Teile unterteilt und zur Fällung der einzelnen Lösungen des primären kationischen Farbstoffs und des Aufhellers verwendet. Danach wurde das gefällte Color Index Basic Red 12 und das gefällte Dehydroabietylamin miteinander vermischt. Weder die Massetonfarbe noch die aufgehellte Verdünnung zeigten im Vergleich zu der Massetonfarbe und aufgehellten Verdünnung des Standards irgendeine nennenswerte Verbesserung.

## Vergleichsbeispiel 2

Die Arbeitsweise des Beispiels 1 wurde wiederholt, jedoch mit der Abweichung, daß das Acetat des Dehydroabietylamins durch ein Stoffmengenäquivalent ("molares Äquivalent") des Ammoniumacetat-Salzes jedes der folgenden Amine ersetzt wurde:
  (1) Anilin
  (2) Kokos-Amin
  (3) Di-Kokos-Amin
  (4) Methyldi-Kokos-Amin
  (5) hydriertes Kondensationsprodukt aus Talg-Amin und Acrylnitril
  (6) Ethoxylierungsprodukt des auf diesem Talg-Amin basierenden Diamins.

Keiner dieser Versuche lieferte ein Pigment, das irgendeine Verbesserung in bezug auf Helligkeit, Reinheit oder Transparenz im Vergleich zu dem Standard aufwies. Tatsächlich war die Farbstärke infolge der Verdünnung des gefällten Farbstoffs durch das Amin sogar etwas vermindert.

6

**Vergleichsbeispiel 3**

Die Arbeitsweise des Beispiels 1 wurde wiederholt, jedoch mit der Abweichung, daß der Farbstoff Color Index Basic Red 12 auf Gewichts-Basis durch einen der folgenden kationischen Farbstoffe ersetzt wurde:
Color Index Basic Yellow 21.
Color Index Basic Yellow 11.
Color Index Basic Yellow 29.
Color Index Basic Yellow 28.

Keiner dieser Versuche lieferte ein Pigment, das irgendeine Verbesserung in bezug auf Helligkeit, Reinheit oder Transparenz im Vergleich zu demselben kationischen Farbstoff bei Fällung in Abwesenheit des Acetats von Dehydroabietylamin aufwies. Tatsächlich verminderte die Verdünnung des gefällten Farbstoffs durch das gefällte Amin die Farbstärke sogar etwas im Vergleich zu der amin-freien Version desselben Farbstoffs.

**Vergleichsbeispiel 4**

Die Arbeitsweise des Beispiels 1 wurde wiederholt, jedoch mit der Abweichung, daß der Farbstoff Color Index Basic Red 12 auf Gewichts-Basis durch Color Index Basic Red 1 ersetzt wurde. Es gab nur eine geringfügige Verbesserung der Helligkeit und Reinheit des resultierenden Pigments im Vergleich zu dem gleichen Pigment hergestellt in Abwesenheit des Acetats von Dehydroabietylamin.

**Beispiel 4**

Die Arbeitsweise des Beispiels 1 wurde wiederholt, jedoch mit der Abweichung, daß der Farbstoff Color Index Basic Red 12 auf Gewichts-Basis durch Color Index Basic Violet 10 ersetzt wurde. Es gab eine signifikante Verbesserung sowohl der Reinheit als auch der Helligkeit des resultierenden Pigments im Vergleich zu dem gleichen Pigment hergestellt in Abwesenheit des Acetats von Dehydroabietylamin.

**Beispiel 5**

Die Arbeitsweise des Beispiels 1 wurde wiederholt, jedoch mit der Abweichung, daß der Farbstoff Color Index Basic Red 12 auf Gewichts-Basis einmal durch Color Index Basic Red 14 und einmal durch Color Index Basic Red 28 ersetzt wurde. Die erhaltenen Pigmente zeigten eine wesentliche Verbesserung der Reinheit und Helligkeit im Vergleich zu den ohne das Acetat von Dehydroabietylamin hergestellten Pigmenten.

**Beispiel 6**

Die Arbeitsweise des Beispiels 1 wurde wiederholt, jedoch mit der Abweichung, daß die 27,5 g kristallines Natriummolybdat durch 37,6 g Natriumwolframat-Kristalle ersetzt wurden. Das erhaltene Pigment zeigte eine wesentliche Verbesserung der Reinheit und Helligkeit im Vergleich zu dem gleichen Pigment hergestellt ohne das Acetat von Dehydroabietylamin.

**Beispiel 7**

Ein getöntes Pigment wurde hergestellt durch gemeinsame Fällung von Color Index Basic Red 12 mit Color Index Basic Yellow 29. 16,15 g einer Lösung mit 45 Gew.-% des Basic Red 12, 0,38 g des Basic Yellow 29 und 0,38 g Eisessig wurden zu 500 ml Wasser von 50°C hinzugefügt. Zu dieser Mischung wurden 10,0 g einer Lösung von 50 Gew.-% des Acetats von Dehydroabietylamin in Isopropanol/Wasser und 20 ml Wasser gegeben. Das Volumen wurde mit Wasser auf 870 ml eingestellt, und der beobachtete pH betrug 4,1.

Eine Lösung einer komplexen Heteropolysäure wurde hergestellt durch Zugabe von 27,45 g $Na_2MoO_4 \cdot 2 H_2O$ und 3,23 g Natriummetasilicat zu 300 ml Wasser von 30°C. Der pH wurde mit HCl von 20° Be auf 2,5 eingestellt, und das Volumen wurde mit Wasser auf 525 ml eingestellt. Die Lösung wurde auf 50°C erhitzt.

Die Lösung der komplexen Heteropolysäure wurde während einer Zeitspanne von etwa 10 min zu der Lösung des Farbstoffs hinzugefügt. Die Mischung wurde gerührt, bis ein Tüpfel-Test des Filtrats der Aufschlämmung ergab, daß kein Auslaufen stattfand und der Farbstoff vollständig ausgefällt war. Die Aufschlämmung wurde dann filtriert, gewaschen und bei 60°C getrocknet. Die Ausbeute an Pigment betrug 27,4 g.

Dieses Verfahren wurde wiederholt, jedoch mit der Abweichung, daß das Acetat von Dehydroabietylamin fortgelassen wurde. Erhalten wurden 17,2 g eines Vergleichspigments oder Standards.

Das Pigment wurde in der gleichen Weise wie in Beispiel 1 bewertet und als heller, reiner und transparenter als das gleiche Pigment hergestellt in Abwesenheit des Acetats des Dehydroabietylamins.

**Beispiel 8**

Die Arbeitsweise des Beispiels 7 wurde wiederholt, jedoch mit der Abweichung, daß 15,3 g der Lösung von Color Index Basic Red 12 und 0,76 g des Color Index Basic Yellow 29 verwendet wurden. 510 ml der Lösung der komplexen Säure wurden zur Herstellung von 27,5 g Pigment mit überlegener Reinheit und Helligkeit verbraucht.

**Beispiel 9**

Die Arbeitsweise des Beispiels 7 wurde wiederholt, jedoch mit der Abweichung, daß 13,6 g der Lösung von Color Index Basic Red 12 und 1,53 g des Color Index Basic Yellow 29 verwendet wurden. 500 ml der Lösung der komplexen Säure wurden zur Herstellung von 27,6 g Pigment mit überlegener Reinheit und Helligkeit verbraucht.

**Beispiel 10**

Die Arbeitsweise des Beispiels 7 wurde viermal wiederholt, wobei unter Einsatz der nachstehenden unterschiedlichen Mengen Color Index Basic Red 12 und Color Index Basic Yellow 28 Pigmente mit überlegener Reinheit und Helligkeit erhalten wurden:

| Rot | Gelb | Verbrauch an komplexer Säure | Ausbeute an Pigment |
|---|---|---|---|
| 16,75 g | 0,19 g | 500 ml | 27,4 g |
| 16,15 g | 0,38 g | 510 ml | 27,6 g |
| 15,30 g | 0,76 g | 510 ml | 27,6 g |
| 13,60 g | 1,53 g | 500 ml | 27,1 g |

**Beispiel 11**

Eine rote Illustrations-Druckfarbe wurde hergestellt, die das nach der Arbeitsweise gemäß Beispiel 1 gewonnene Pigment enthielt. 24 Teile dieses Pigments wurden mit 36 Teilen eines Alkydisophthalat-Lösemittels kombiniert und mittels einer Dreiwalzenmühle vermahlen. 40 Teile eines für Papier verwendeten rasch abbindenden Offset-Lösemittels wurden dieser Mischung zugesetzt.

Eine zweite Druckfarbe wurde hergestellt durch Benetzen von 19,67 Teilen Color Index Pigment Red 57 mit 29,51 Teilen eines Alkydisophthalat-Lösemittels und Vermahlen auf der gleichen Dreiwalzenmühle. 50,82 Teile des gleichen Lösemittels für den Papierdruck wurden dieser Mischung zugesetzt.

Die beiden Druckfarben wurden in einem solchen Verhältnis miteinander vermischt, daß die fertige Formulierung 15 Teile des Pigments nach Beispiel 1 auf 85 Teile des Pigment Red 57 in der fertigen roten Illustrations-Druckfarbe enthielt. Diese Druckfarbe wurde auf einer technischen lithographischen Druckstraße in einem schnell abbindenden Offset-Verfahren eingesetzt.

Es wurde gefunden, daß die damit erhaltenen Lithographien in ihrer Farbe denjenigen gleich waren, die mit einer Druckfarbe erhalten worden waren, die Color Index Pigment Red 81 und Color Index Pigment Red 57 in einem Verhältnis 30 : 70 enthielt. Auf diese Weise wurde festgestellt, daß das nach der Arbeitsweise gemäß Beispiel 1 erhaltene Pigment in bezug auf eine Verstärkung des Farbwertes des Color Index Pigment Red 57 in einer roten Standard-Illustrations-Druckfarbe für das Verfahren des Vierfarbendrucks auf Papier wirksamer war als Color Index Pigment Red 81. Dieses Ergebnis wurde erzielt ohne Einbußen bzw. Konzessionen hinsichtlich des Verarbeitungsverhaltens auf der Presse oder des Verhaltens in bezug auf Ausbluten oder Lichtechtheit des fertigen Druckerzeugnisses.

# 0 180 116

**Patentansprüche**

1. Pigment-Zusammensetzung, enthaltend einen kationischen Farbstoff ausgewählt aus der aus
Color Index Basic Red 12,
Color Index Basic Red 28,
Color Index Basic Red 14 und
Color Index Basic Violet 10

bestehenden Gruppe, der aus wäßriger Lösung durch Reaktion mit einer komplexen Heteropolysäure in Gegenwart eines Farbverstärkungsmittels ausgewählt aus der aus quaternären Ammoniumsalzen und Ammoniumsalzen von Aminen, die sich von Abietinsäure oder natürlichen oder synthetischen Derivaten der Abietinsäure ableiten, bestehenden Gruppe ausgefällt worden ist.

2. Reines starkes Pigment, das zur Tönung von Color Index Pigment Red 57 für die Herstellung einer roten Illustrations-Druckfarbe hoher Qualität für die Vierfarben-Lithographie, die der durch die Tönung mit Color Index Pigment 81 erhältlichen gleichwertig ist, geeignet ist, erhalten durch Ausfällen von Color Index Basic Red 12 aus wäßriger Lösung mit einer komplexen Heteropolysäure in Gegenwart eines Farbverstärkungsmittels ausgewählt aus der aus quaternären Ammoniumsalzen und Ammoniumsalzen von Aminen, die sich von Abietinsäure oder natürlichen oder synthetischen Derivaten der Abietinsäure ableiten, bestehenden Gruppe.

3. Pigment nach Anspruch 2, dadurch gekennzeichnet, daß die komplexe Heteropolysäure aus der aus Silicomolybdänsäure, Phosphomolybdänsäure, Phosphosilicomolybdänsäure, Silicowolframsäure, Phoshpowolframsäure, Phosphisilicowolframsäure, Silicomolybdänwolframsäure, Phosphomolybdänwolframsäure, Phosphosilicomolybdänwolframsäure, Phosphovanadomolybdänsäure, Phosphovanadowolframsäre, Silicovanadomolybdänsäure, Silicovanadowolframsäure, Phosphovanadomolybdowolframsäure und Silicovanadomolybdowolframsäure bestehenden Gruppe ausgewählt ist.

4. Pigment nach Anspruch 2, dadurch gekennzeichnet, daß das Farbverstärkungsmittel aus der aus Pyridinium-Salzen, quaternären Alkylarylammonium-Salzen und den Ammoniun-Salzen des Dehydroabietylamins bestehenden Gruppe ausgewählt ist.

5. Für die Vierfarben-Lithographie hoher Qualität geeignete rote Illustrations-Druckfarbe, enthaltend
1) zwischen etwa 5 und 25 Gew.-% einer Pigmentbasis aus Color Index Pigment Red 57 und dem Pigment nach Anspruch 10 in einem Gewichts-Verhältnis zwischen etwa 8,5 : 1,5 und 1 : 1 und
2) zwischen etwa 95 und 75 Gew.-% eines Druckfarben Lösemittels.

6. Verfahren zur Herstellung eines Pigments mit verbesserter Helligkeit und Reinheit aus einem primären kationischen Farbstoff ausgewählt aus der aus Color Index Basic Red 12, Color Index Basic Red 14, Color Index Basic Red 28 und Color Index Basic Violet 10 bestehenden Gruppe, umfassend
1) das Herstellen einer sauren wäßrigen Lösung des primären kationischen Farbstoffs,
2) das Herstellen einer stark sauren wäßrigen Lösung wenigstens einer komplexen Heteropolysäure ausgewählt aus der aus Silicomolybdänsäure, Phosphomolybdänsäure, Phosphosilicomolybdänsäure, Silicowolframsäure, Phosphowolframsäure, Phosphosilicowolframsäure, Silicomolybdänwolframsäure, Phosphomolybdänwolframsäure, Phosphosilicomolybdänwolframsäure, Phosphovanadomolybdänsäure, Phosphovanadowolframsäure, Silicovanadomolybdänsäure, Silicovanadowolframsäure, Phosphovanadomolybdowolframsäure und Silicovanadomolybdowolframsäure und deren Kombinationen bestehenden Gruppe,
3) das Kombinieren der Lösung des primären kationischen Farbstoffs und der Lösung der komplexen Heteropolysäure in Gegenwart eines Farbverstärkungsmittels ausgewählt aus der aus quaternären Ammoniumsalzen und Ammoniumsalzen von Aminen, die sich von Abietinsäure ableiten, bestehenden Gruppe und
4) das Gewinnen des Pigments durch Filtration und Waschen desselben.

7. Verfahren zur Herstellung eines getönten Pigments mit erhöhter Brillanz und Reinheit aus Color Index Basic Red 12, umfassend das Fällen dieses Farbstoffs und einer kleineren Menge, bezogen auf diesen Farbstoff, eines Farbstoffs ausgewählt aus Color Index Basic Yellow 29 und Color Index Basic Yellow 28 aus wäßriger Lösung mit wenigstens einer komplexen Heteropolysäure in Gegenwart eines Farbverstärkungsmittels ausgewählt aus der aus quaternären Ammoniumsalzen und Ammoniumsalzen von Aminen, die sich von Abietinsäure oder ihren natürlichen oder synthetischen Derivaten ableiten, bestehenden Gruppe.

8. Pigment-Zusammensetzung, enthaltend eine größere Menge eines gefällten primären kationischen Farbstoffs ausgewählt aus der aus Color Index Basic Red 12, Color Index Basic Red 28, Color Index Basic Red 14 und Color Index Basic Violet 10 bestehenden Gruppe und eine kleinere Menge eines gefällten sekundären kationischen Farbstoffs, der für sich allein durch die Anwesenheit des Farbverstärkungsmittels bei einer Fällung mittels einer komplexen Heteropolysäure nicht in günstiger Weise beeinflußt wird und ein Lackpigment bildet, das eine feste Lösung mit dem Lackpigment des primären kationischen Farbstoffs zu bilden vermag, dadurch gekennzeichnet, daß die Farbstoffe aus wäßriger Lösung mit einer komplexen Heteroropolysäure in

9

Gegenwart eines Farbverstärkungsmittels ausgewählt aus der aus quaternären Ammoniumsalzen und Ammoniumsalzen von Aminen, die sich von Abietinsäure oder ihren natürlichen oder synthetischen Derivaten ableiten, bestehenden Gruppe gemeinsam ausgefällt werden.

9. Pigment-Zusammensetzung, enthaltend eine größere Menge an gefälltem Color Index Basic Red 12 und eine kleinere Menge eines gefällten sekundären kationischen Farbstoffs ausgewählt aus der aus Color Index Basic Yellow 29 und Color Index Basic Yellow 28 bestehenden Gruppe, dadurch gekennzeichnet, daß die Farbstoffe aus wäßriger Lösung mit einer komplexen Heteropolysäure in Gegenwart eines Farbverstärkungsmittels ausgewählt aus der aus quaternären Ammoniumsalzen und Ammoniumsalzen von Aminen, die sich von Abietinsäure oder ihren natürlichen oder synthetischen Derivaten ableiten, bestehenden Gruppe gemeinsam ausgefällt werden.

10. Zusammensetzung nach Anspruch 9, dadurch gekennzeichnet, daß
1)        die komplexe Heteropolysäure Silicomolybdänsäure ist und
2)        das Farbverstärkungsmittel ein Ammonium-Salz des Dehydroabietylamins ist.

## Claims

1. Pigment composition containing a cationic dye selected from the group consisting of
                Colour Index Basic Red 12,
                Colour Index Basic Red 28,
                Colour Index Basic Red 14 and
                Colour Index Basic Violet 10,

which has been precipitated from aqueous solution by reaction with a complex heteropoly acid in the presence of a colour-enhancing agent selected from the group consisting of quaternary ammonium salts and ammonium salts of amines derived from abietic acid or natural or synthetic derivatives of abietic acid.

2. Clean strong pigment suitable for shading Colour Index Pigment Red 57 to prepare a process red printing ink of high quality for four-colour lithography equivalent to that obtainable by shading with Colour Index Pigment 81, obtainable by precipitating colour Index Basic Red 12 from aqueous solution with a complex heteropoly acid in the presence of a colour-enhancing agent selected from the group consisting of quaternary ammonium salts and ammonium salts of amines derived from abietic acid or natural or synthetic derivatives of abietic acid.

3. Pigment according to Claim 2, characterized in that the complex heteropoly acid is selected from the group consisting of silicomolybdic acid, phosphomolybdic acid, phosphosilicomolybdic acid, silicotungstic acid, phosphotungstic acid, phosphosilicotungstic acid, silicomolybdictungstic acid, phosphomolybdictungstic acid, phosphosilicomolybdictungstic acid, phosphovanadomolybdic acid, phosphovanadotungstic acid, silicovanadomolybdic acid, silicovanadotungstic acid, phosphovanadomolybdotungstic acid and silicovanadomolybdotungstic acid.

4. Pigment according to Claim 2, characterized in that the colour-enhancing agent is selected from the group consisting of pyridinium salts, quaternary alkylarylammonium salts and the ammonium salts of dehydroabietylamine.

5. Process red printing ink suitable for high quality four-colour lithography, containing
1)        between about 5 and 25 % by weight of a Pigment base comprising colour Index Pigment Red 57 and the pigment of claim 2 in a weight ratio of between about 8.5 : 1.5 and 1 : 1, and
2)        between about 95 and 75 % by weight of a printing ink solvent.

6. Process for the preparation of a pigment of improved brightness and cleanliness from a primary cationic dye selected from the group consisting of colour Index Basic Red 12, Colour Index Basic Red 14, Colour Index Basic Red 28 and Colour Index Basic Violet 10, comprising
1)
                preparing an acidic aqueous solution of primary cationic dye,
2)                preparing a strongly acidic aqueous solution of at least one complex heteropoly acid selected from the group consisting of silicomolybdic acid, phosphomolybdic acid, phosphosilicomolybdic acid, silicotungstic acid, phosphotungstic acid, phosphosilicotungstic acid, silicomolybdictungstic acid, phosphomolybdictungstic acid, phosphosilicomolybdictungstic acid, phosphovanadomolybdic acid, phosphovanadotungstic acid, silicovanadomolybdic acid, silicovanadotungstic acid, phosphovanadomolybdictungstic acid and silicovanadomolybdotungstic acid and combinations thereof,
3)                combining the primary cationic dye solution and the complex heteropoly acid solution in the presence of a colour-enhancing agent selected from the group consisting of quaternary ammonium salts and ammonium salts of amines derived from abietic acid, and
4)                recovering the pigment by filtration and washing it.

7. Process for the preparation of a shaded pigment of increased brilliance and cleanliness from Colour Index Basic Red 12, comprising precipitating this dye and a minor amount, based on this dye, of a dye selected from the group consisting of Colour Index Basic Yellow 29 and Colour Index Basic Yellow 28 from aqueous solution with at least one complex heteropoly acid in the presence of a colour-enhancing agent selected from the group consisting of quaternary ammonium salts and ammonium salts of amines derived from abietic acid or its natural or synthetic derivatives.

8. Pigment composition containing a major amount of a precipitated primary cationic dye selected from the group consisting of Colour Index Basic Red 12, Colour Index Basic Red 28, Colour Index Basic Red 14 and Colour Index Basic Violet 10 and a minor amount of a precipitated secondary cationic dye which alone is not favourably affected by the presence of the colour-enhacing agent when precipitated by a complex heteropoly acid and which forms a lake pigment which can form a solid solution with the laked pigment of the primary cationic dye, characterized in that the dyes are coprecipitated from aqueous solution by a complex heteropoly acid in the presence of a colour enhancing agent selected from the group consisting of quaternary ammonium salts and ammonium salts of amines derived from abietic acid or its natural or synthetic derivatives.

9. Pigment composition containing a major amount of precipitated Colour Index Basic Red 12 and a minor amount of a precipitated secondary cationic dye selected from the group consisting of Colour Index Basic Yellow 29 and Colour Index Basic Yellow 28, characterized in that the dyes are coprecipitated from aqueous solution by a complex heteropoly acid in the presence of a colour-enhacing agent selected from the group consisting of quaternary ammonium salts and ammonium salts of amines derived from abietic acid or its natural or synthetic derivatives.

10. Composition according to claim 9, characterized in that
1)         the complex heteropoly acid is silicomolybdic acid and
2)         the colour-enhancing agent is an ammonium salt of dehydroabietylamine.

## Revendications

1. Composition pigmentaire, contenant un colorant cationique choisi dans le groupe constitué
        du Color Index Basic Red 12,
        du Color Index Basic Red 28,
        du Color Index Basic Red 14 et
        du Color Index Basic violet 10,

qui a été précipité dans une solution aqueuse par réaction avec un hétéropolyacide complexe en présence d'un agent d'intensification de couleur choisi dans le groupe constitué des sels d'ammonium quaternaire et des sels d'ammonium d'amines qui dérivent de l'acide abiétique ou de dérivés naturels ou synthétiques de l'acide abiétique.

2. Pigment pur intense, qui convient au nuançage de Color Index Pigment Red 57 pour la production d'une encre d'impression rouge pour illustrations, de haute qualité, pour la lithographie en quatre couleurs, qui équivaut à celle que l'on obtient par le nuançage au pigment Color Index Pigment 81, obtenu par précipitation de Color Index Basic Red 12 en solution aqueuse avec un hétéropolyacide complexe en présence d'un agent d'intensification de couleur choisi dans le groupe constitué de sels d'ammonium quaternaire et de sels d'ammonium d'amines qui sont dérivés de l'acide abiétique ou de dérivés naturels ou synthétiques de l'acide abiétique.

3. Pigment suivant la revendication 2, caractérisé en ce que l'hétéropolyacide complexe est choisi dans le groupe constitué de l'acide silicomolybdique, de l'acide phosphomolybdique, de l'acide phosphosilicomolybdique, de l'acide silicotungstique, de l'acide phosphotungstique, de l'acide phosphosilicotungstique, de l'acide silicomolybdotungstique, de l'acide phosphomolybdotungstique, de l'acide phosphosilicomolybdotungstique, de l'acide phosphovanadomolybdique, de l'acide phosphovanadotungstique, de l'acide silicovanadomolybdique, de l'acide silicovanadotungstique, de l'acide phosphovanadomolybdotungstique et de l'acide silicovanadomolybdotungstique.

4. Pigment suivant la revendication 2, caractérisé en ce que l'agent d'intensification de couleur est choisi dans le groupe constitué de sels de pyridinium, de sels d'alkylarylammonium quaternaire et des sels d'ammonium de la déhydro-abiétylamine.

5. Encre d'impression rouge pour illustrations, qui convient pour la lithographie en quatre couleurs de haute qualité, contenant
1)         entre environ 5 et 25 % en poids d'une base pigmentaire formée de Color Index Pigment Red 57 et du Pigment suivant la revendication 10 dans un rapport en poids compris entre environ 8,5 : 1,5 et 1 : 1 et
2)         entre environ 95 et 75 % en poids d'un solvant pour encre d'impression.

6. Procédé de production d'un pigment doué de très bonnes propriétés de luminosité et de pureté à partir d'un colorant cationique primaire choisi dans le groupe constitué de Color Index Basic Red 12, Color Index Basic Red 14, Color Index Basic Red 28 et Color Index Basic Violet 10, comprenant

1) la préparation d'une solution aqueuse acide du colorant cationique primaire

2) la préparation d'une solution aqueuse fortement acide d'au moins un hétéropolyacide complexe choisi dans le groupe constitué de l'acide silicomolybdique, de l'acide phosphomolybdique, de l'acide phosphosilicomolybdique, de l'acide silicotungstique, de l'acide phosphotungstique, de l'acide phosphosilicotungstique, de l'acide silicomolybdotungstique, de l'acide phosphomolybdotungstique, de l'acide phosphosilicomolybdotungstique, de l'acide phosphovanadomolybdotungstique, de l'acide phosphovanadotungstique, de l'acide silicovanadomolybdotungstique, de l'acide silicovanadotungstique, de l'acide phosphovanadomolybdotungstique et de l'acide silicovanadomolybdtungstique et de leurs mélanges,

3) la réunion de la solution du colorant cationique primaire et de la solution de l'hétéropolyacide complexe en présence d'un agent d'intensification de couleur choisi dans le groupe constitué des sels d'ammonium quaternaire et des sels d'ammonium d'amines qui dérivent de l'acide abiétique et

4) l'obtention du pigment par filtration et lavage.

7. Procédé de préparation d'un pigment nuancé de brillance et de pureté élevées à partir de Color Index Basic Red 12, comprenant la précipitation de ce colorant et d'une quantité plus faible, par rapport à ce colorant, d'un colorant choisi entre Color Index Basic Yellow 29 et Color Index Basic Yellow 28 en solution aqueuse avec au moins un hétéropolyacide complexe en présence d'un agent d'intensification de couleur choisi dans le groupe constitué de sels d'ammonium quaternaire et de sels d'ammonium d'amines qui proviennent de l'acide abiétique ou de ses dérivés naturels ou synthétiques.

8. Composition pigmentaire, contenant une quantité dominante d'un colorant cationique primaire précipité choisi dans le groupe des colorants Color Index Basic Red 12, Color Index Basic Red 28, Color Index Basic Red 14 et Color Index Basic Violet 10, et une quantité plus faible d'un colorant cationique secondaire précipité, qui, à lui seul, ne subit pas d'influence défavorable du fait de la présence de l'agent d'intensification de couleur lors d'une précipitation au moyen d'un hétéropolyacide complexe et qui forme un pigment pour laque qui peut former une solution solide avec le pigment pour laque du colorant cationique primaire, caractérisée en ce que les colorants sont précipités conjointement en solution aqueuse avec un hétéropolyacide complexe en présence d'un agent d'intensification de couleur choisi dans le groupe constitué de sels d'ammonium quaternaire et de sels d'ammonium d'amines qui proviennent de l'acide abiétique ou de ses dérivés naturels, ou synthétiques.

9. Composition pigmentaire contenant une quantité dominante de Color Index Basic Red 12 précipité et une quantité plus faible d'un colorant cationique secondaire précipité choisi dans le groupe constitué de Color Index Basic Yellow 29 et Color Index Basic Yellow 28, caractérisée en ce que les colorants sont précipités conjointement en solution aqueuse avec un hétéropolyacide complexe en présence d'un agent d'intensification de couleur choisi dans le groupe constitué de sels d'ammonium quaternaire et de sels d'ammonium d'amines qui proviennent de l'acide abiétique ou de ses dérivés naturels ou synthétiques.

10. Composition suivant la revendication 9, caractérisée en ce que

1) l'hétéropolyacide complexe est l'acide silicomolybdique et

2) l'agent d'intensification de couleur est un sel d'ammonium de la déhydro-abiétylamine.